# EUROPEAN PATENT APPLICATION

(11) **EP 4 195 377 A1**
(43) Date of publication of application: **14.06.2023**
(21) Application number: 22767509.7
(22) Date of filing: 08.03.2022
(51) Int. Cl.: H01M 50/178, H01M 50/533, H01M 50/534, H01M 50/342, H01M 50/186

(54) **BATTERY CELL AND BATTERY MODULE COMPRISING SAME**

(30) Priority: 08.03.2021 KR 20210030398
(71) Applicant: LG Energy Solution, Ltd., Seoul 07335 (KR)
(72) Inventor: LIM, Hun-Hee, Daejeon 34122 (KR); KIM, Sang-Hun, Daejeon 34122 (KR); KANG, Min-Hyeong, Daejeon 34122 (KR); YU, Hyung-Kyun, Daejeon 34122 (KR); HWANG, Soo-Ji, Daejeon 34122 (KR)
(74) Representative: Plasseraud IP
(86) International application number: PCT/KR2022/003314
(87) International publication number: WO 2022/191613

(57) **Abstract**

Disclosed is a battery cell, which includes a battery case having an accommodation portion in which an electrode assembly is mounted, and a sealing portion formed by sealing an outer periphery thereof; an electrode lead electrically connected to an electrode tab included in the electrode assembly and protruding out of the battery case via the sealing portion; and a lead film located at a portion corresponding to the sealing portion in at least one of an upper portion and a lower portion of the electrode lead, wherein a surface-deformed portion is formed on an outer surface of the electrode lead, and the surface-deformed portion is located between the lead film and the electrode lead.

## Description

### TECHNICAL FIELD

The present application claims priority to Korean Patent Application No. 10-2021-0030398 filed on March 8, 2021 in the Republic of Korea, the disclosures of which are incorporated herein by reference.

The present disclosure relates to a battery cell and a battery module including the same, and more particularly, to a battery cell with improved external emission of gas generated inside the battery cell while securing easy manufacture, and a battery module including the same.

### BACKGROUND ART

As technology development and demand for mobile devices increase, the demand for secondary batteries as an energy source is rapidly increasing. In particular, secondary batteries are of great interest as energy sources not only for mobile devices such as mobile phones, digital cameras, notebooks and wearable devices, but also for power devices such as electric bicycles, electric vehicles and hybrid electric vehicles.

Depending on the shape of a battery case, these secondary batteries are classified into a cylindrical battery and a prismatic battery in which a battery assembly is included in a cylindrical or prismatic metal can, and a pouch-type battery in which the battery assembly is included in a pouch-type case of an aluminum laminate sheet. Here, the battery assembly included in the battery case is a power element including a positive electrode, a negative electrode, and a separator interposed between the positive electrode and the negative electrode, and capable of charging and discharging, and is classified into a jelly-roll type in which long sheet-type positive and negative electrodes coated with an active material are wound with a separator being interposed therebetween, and a stack type in which a plurality of positive and negative electrodes are sequentially stacked with a separator being interposed therebetween.

Among them, in particular, a pouch-type battery in which a stack-type or stack/folding-type battery assembly is included in a pouch-type battery case made of an aluminum laminate sheet is being used more and more due to low manufacturing cost, low weight, and easy modification.

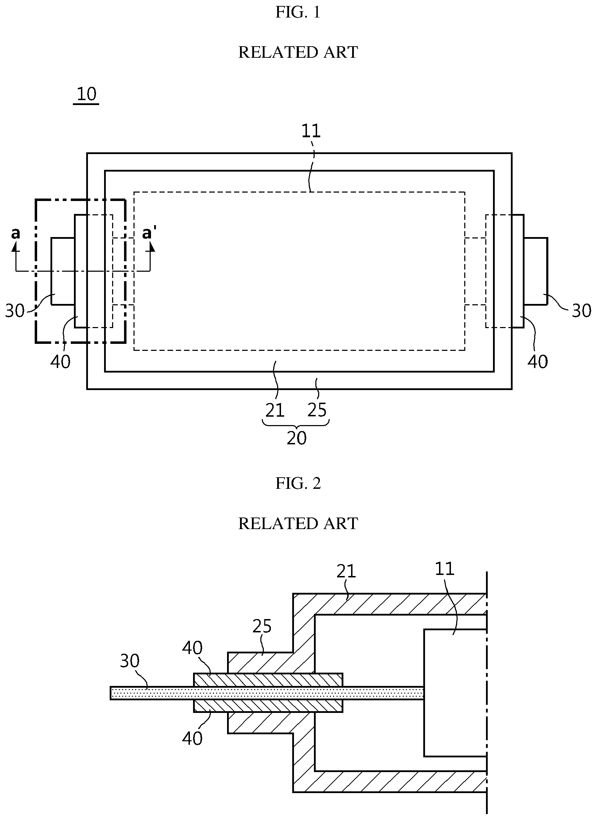

FIG. 1 is a top view showing a conventional battery cell. FIG. 2 is a cross-sectional view, taken along the axis a-a' of FIG. 1. Referring to FIGS. 1 and 2, a conventional battery cell 10 includes a battery case 20 having an accommodation portion 21 in which a battery assembly 11 is mounted, and a sealing portion 25 formed by sealing an outer periphery thereof. Here, the battery cell 10 includes an electrode lead 30 protruding out of the battery case 20 via the sealing portion 25, and a lead film 40 is located between upper and lower portions of the electrode lead 30 and the sealing portion 25.

However, as the energy density of the battery cell increases in recent years, there is a problem that the amount of gas generated inside the battery cell also increases. In the case of the conventional battery cell 10, a component capable of discharging the gas generated inside the battery cell is not included, so a venting may occur in the battery cell due to gas generation. In addition, moisture may penetrate into the battery cell damaged by the venting, which may cause side reactions, and there is a problem that battery performance deteriorates and additional gas is generated. Accordingly, there is an increasing need to develop a battery cell with improved external emission of gas generated inside the battery cell.

### DISCLOSURE

### Technical Problem

The present disclosure is directed to providing a battery cell with improved external emission of gas generated inside the battery cell while securing easy manufacture, and a battery module including the same.

The object to be solved by the present disclosure is not limited to the above-mentioned object, and the objects not mentioned here may be clearly understood by those skilled in the art from this specification and the accompanying drawings.

### Technical Solution

In one aspect of the present disclosure, there is provided a battery cell, comprising: a battery case having an accommodation portion in which an electrode assembly is mounted, and a sealing portion formed by sealing an outer periphery thereof; an electrode lead electrically connected to an electrode tab included in the electrode assembly and protruding out of the battery case via the sealing portion; and a lead film located at a portion corresponding to the sealing portion in at least one of an upper portion and a lower portion of the electrode lead, wherein a surface-deformed portion is formed on an outer surface of the electrode lead, and the surface-deformed portion is located between the lead film and the electrode lead.

The surface-deformed portion may be formed by removing a part of the outer surface of the electrode lead.

A coating layer may be formed on the outer surface of the electrode lead, and the surface-deformed portion may be formed by removing a part of the coating layer.

The surface-deformed portion may be formed by removing the coating layer by laser etching.

The coating layer may be made of a metal material.

The metal material may contain at least one of chrome and nickel.

The surface-deformed portion may be configured to extend along a protruding direction of the electrode lead, and based on the protruding direction of the electrode lead, an end of the surface-deformed portion disposed adjacent to an outer side of the sealing portion may be located inward of an end of the lead film.

The surface-deformed portion may be configured to extend along a protruding direction of the electrode lead, and based on the protruding direction of the electrode lead, an end of the surface-deformed portion disposed adjacent to an inner side of the sealing portion may be located inward of an end of the lead film.

The surface-deformed portion may be configured to extend along a protruding direction of the electrode lead, and based on the protruding direction of the electrode lead, an end of the surface-deformed portion disposed adjacent to an outer side of the sealing portion may be located outward of an end of the lead film.

The surface-deformed portion may be configured to extend along a protruding direction of the electrode lead, and based on the protruding direction of the electrode lead, an end of the surface-deformed portion disposed adjacent to an inner side of the sealing portion may be located outward of an end of the lead film.

The surface-deformed portion may be configured to extend in a direction perpendicular to a protruding direction of the electrode lead, and a length of the surface-deformed portion may be smaller than a width of the electrode lead.

The surface-deformed portion may have a circular shape or a rectangular shape.

Based on a protruding direction of the electrode lead, one end of the surface-deformed portion may be located inward of an inner surface of the sealing portion.

Based on the protruding direction of the electrode lead, the other end of the surface-deformed portion may be located outward of an outer surface of the sealing portion.

An area of the other end of the surface-deformed portion exposed outward of the outer surface of the sealing portion may be greater than an area of one end of the surface-deformed portion exposed inward of the inner surface of the sealing portion.

The surface-deformed portion may include a first surface-deformed portion and a second surface-deformed portion connected to each other, the first surface-deformed portion may be configured to extend along a longitudinal direction of the sealing portion, and the second surface-deformed portion may be configured to extend along a protruding direction of the electrode lead.

A length of the first surface-deformed portion may be smaller than a width of the electrode lead.

The first surface-deformed portion may be located adjacent to an inside of the battery case, and the second surface-deformed portion may be located adjacent to an outside of the battery case.

The first surface-deformed portion may be located adjacent to an outside of the battery case, and the second surface-deformed portion may be located adjacent to an inside of the battery case.

The first surface-deformed portion may be entirely located on the lead film, and one end of the second surface-deformed portion may not be covered by the lead film.

The lead film may include a first lead film and a second lead film, the first lead film may be located at an upper portion of the electrode lead, and the second lead film may be located at a lower portion of the electrode lead.

The electrode lead may be located between the first lead film and the second lead film, and the first lead film and the second lead film may be integrated with each other.

The surface-deformed portion may be located on at least one of an upper surface of the electrode lead and a lower surface of the electrode lead.

The lead film may have gas permeability of 20 Barrer to 60 Barrer at 60°C.

The lead film may have a moisture penetration amount of 0.02 g to 0.2 g for 10 years at 25°C, 50 %RH.

The lead film may contain polypropylene.

The lead film located on the surface-deformed portion may have a thickness of 100 µm to 300 µm.

A width between the other end of the surface-deformed portion and an outermost end of the lead film may be 2 mm or more.

In another aspect of the present disclosure, there is also provided a battery module, comprising the battery cell described above.

### Advantageous Effects

According to the embodiments, the present disclosure provides a battery cell, which includes an electrode lead having a surface-deformed portion, and a battery module including the battery cell, thereby improving the external emission of gas generated inside the battery cell while securing easy manufacture.

The effect of the present disclosure is not limited to the above effects, and the effects not mentioned here will be clearly understood by those skilled in the art from this specification and the accompanying drawings.

### DESCRIPTION OF DRAWINGS

FIG. 1 is a top view showing a conventional battery cell.
FIG. 2 is a cross-sectional view, taken along the axis a-a' of FIG. 1.
FIG. 3 is a top view showing a battery cell according to this embodiment.
FIG. 4 is a perspective view showing an electrode lead included in the battery cell of FIG. 3.
FIG. 5 is a cross-sectional view, taken along the axis c-c' of FIG. 4.
FIG. 6 is a cross-sectional view, taken along the axis d-d' of FIG. 4.
FIG. 7 is an enlarged view showing the electrode lead and a lead film in the battery cell of FIG. 3.
FIG. 8 is a cross-sectional view, taken along the axis b-b' of FIG. 3.
FIG. 9 is a diagram showing that the surface of the electrode lead of FIG. 3 is treated.

### BEST MODE

Hereinafter, with reference to the accompanying drawings, various embodiments of the present disclosure will be described in detail so as to be easily implemented by those skilled in the art. The present disclosure may be implemented in various different forms and is not limited to the embodiments described herein.

In order to clearly explain the present disclosure, parts irrelevant to the description are omitted, and identical or similar components are endowed with the same reference signs throughout the specification.

In addition, since the size and thickness of each component shown in the drawings are arbitrarily expressed for convenience of description, the present disclosure is not necessarily limited to the drawings. In order to clearly express various layers and regions in the drawings, the thicknesses are enlarged. Also, in the drawings, for convenience of explanation, the thickness of some layers and regions is exaggerated.

In addition, throughout the specification, when a part "includes" a certain component, it means that other components may be further included, rather than excluding other components, unless otherwise stated.

In addition, throughout the specification, when referring to "top view", it means that the target part is viewed from above, and when referring to "cross-sectional view", it means that a vertically-cut section of the target part is viewed from a side.

Hereinafter, a pouch battery cell 100 according to an embodiment of the present disclosure will be described. However, here, the description will be made based on one side surface of both side surfaces of the pouch battery cell 100, but it is not necessarily limited thereto, and the same or similar contents may be described in the case of the other side surface.

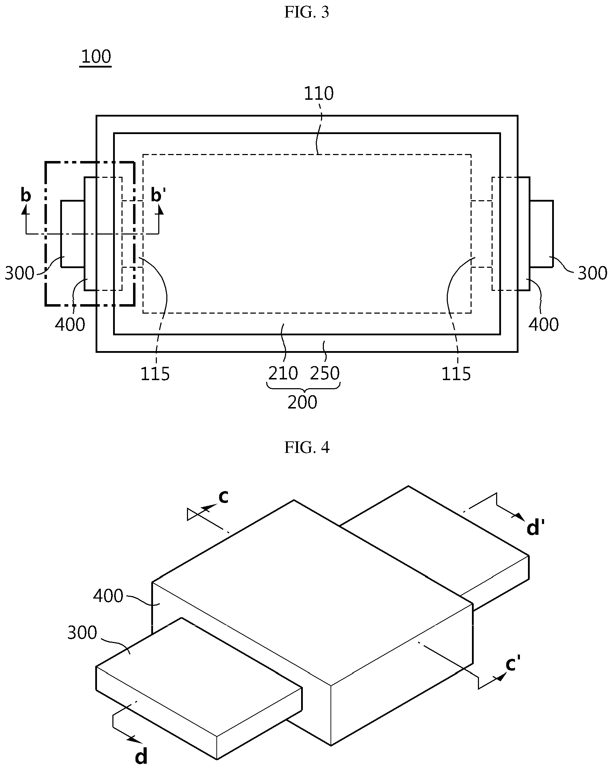

FIG. 3 is a top view showing a battery cell according to this embodiment.

Referring to FIG. 3, the battery cell 100 according to this embodiment includes a battery case 200, an electrode lead 300, and a lead film 400.

The battery case 200 includes an accommodation portion 210 in which an electrode assembly 110 is mounted, and a sealing portion 250 formed by sealing an outer periphery thereof. The sealing portion 250 may be sealed by heat, laser, or the like. The battery case 200 may be a laminate sheet including a resin layer and a metal layer. More specifically, the battery case 200 may be made of a laminate sheet, and may include an outer resin layer forming the outermost layer, a barrier metal layer preventing penetration of materials, and an inner resin layer for sealing.

Also, the electrode assembly 110 may have a structure of a jelly-roll type (winding type), a stack type (lamination type), or a composite type (stack/folding type). More specifically, the electrode assembly 110 may include a positive electrode, a negative electrode, and a separator disposed therebetween.

Hereinafter, the electrode lead 300 and the lead film 400 will be mainly described.

FIG. 4 is a perspective view showing an electrode lead included in the battery cell of FIG. 3.

Referring to FIGS. 3 and 4, the electrode lead 300 is electrically connected to an electrode tab (not shown) included in the electrode assembly 110, and protrudes out of the battery case 200 via the sealing portion 250. In addition, the lead film 400 is located at a portion corresponding to the sealing portion 250 in at least one of an upper portion and a lower portion of the electrode lead 300. Accordingly, the lead film 400 may improve the sealing properties of the sealing portion 250 and the electrode lead 300 while preventing a short circuit from occurring in the electrode lead 300 during sealing.

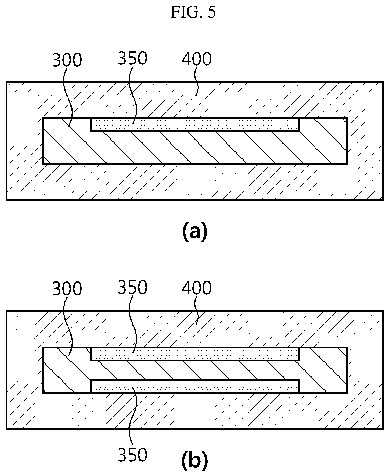

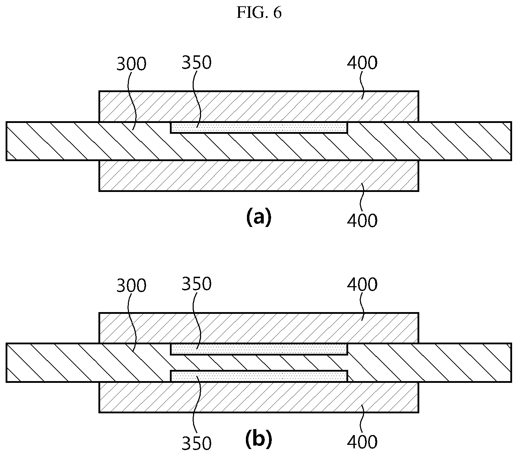

FIG. 5 is a cross-sectional view, taken along the axis c-c' of FIG. 4. FIG. 6 is a cross-sectional view, taken along the axis d-d' of FIG. 4.

Referring to FIGS. 5 and 6, in the electrode lead 300, a surface-deformed portion 350 is formed on the outer surface of the electrode lead 300, and the surface-deformed portion 350 is located between the lead film 400 and the electrode lead 300. In the surface-deformed portion 350, the adhesion between the electrode lead 300 and the lead film 400 is weak, or there is no adhesion at all. More specifically, in the electrode lead 300, the surface-deformed portion 350 may be formed at a position corresponding to the lead film 400.

The surface-deformed portion 350 may be formed by removing a part of the outer surface of the electrode lead 300. However, in FIGS. 5 and 6, the thickness of the surface-deformed portion 350 is somewhat exaggerated, and in fact, the surface-deformed portion 350 may be formed to such a thickness that deformation is substantially not viewed with the naked eye in the appearance of the electrode lead 300.

For example, the surface-deformed portion 350 may have a thickness of 0.01 *µ*m to several hundred *µ*m. However, the thickness of the surface-deformed portion 350 is not limited thereto, and any thickness is applicable as long as it can weaken the adhesion without damaging the airtightness and durability between the electrode lead 300 and the lead film 400.

In this embodiment, since the electrode lead 300 and the lead film 400 are partially spaced apart from each other by the surface-deformed portion 350, the surface-deformed portion 350 may weaken the adhesive force of a part between the electrode lead 300 and the lead film 400.

In this way, the surface-deformed portion 350 may weaken the adhesion of at least a part between the lead film 400 and the electrode lead 300, and the portion where the adhesion is weakened by the surface-deformed portion 350 (hereinafter referred to as a weak adhesion portion) may serve as a gas discharge passage through which the gas inside the battery case 200 can be discharged to the outside.

More specifically, the pressure inside the battery cell 100 is higher than the pressure inside the weak adhesion portion, and the resulting pressure difference may act as a driving force for the gas. At this time, the portion where the weak adhesion portion is located between the electrode lead 300 and the lead film 400 has relatively weak adhesion, so that the gas generated inside the battery cell 100 may be introduced into the weak adhesion portion due to the above-described pressure difference. Also, since the weak adhesion portion may have a pressure difference from the outside due to the gas introduced from the inside of the battery cell 100, the gas introduced into the weak adhesion portion may be discharged to the outside of the battery case 200.

Accordingly, in the battery cell 100 according to this embodiment, the gas generated inside the battery case 200 may be discharged to the weak adhesion portion according to the pressure difference with the inside of the weak adhesion portion, and the gas introduced into the weak adhesion portion may be discharged toward the outside according to the pressure difference with the outside.

Moreover, according to an embodiment of the present disclosure, the position and shape of the weak adhesion portion formed between the lead film 400 and the electrode lead 300 may be controlled by thickness, position, shape, or the like of the surface-deformed portion 350. Therefore, the surface-deformed portion 350 may properly adjust the gas discharge degree inside the pouch according to the weak adhesion portion and the airtightness and durability of the pouch.

For example, a coating layer (not shown) may be formed on the outer surface of the electrode lead 300. Here, the coating layer (not shown) may be a layer formed by coating the outer surface of the electrode lead 300. Here, the surface-deformed portion 350 may be formed by removing a part of the coating layer (not shown). The coating layer (not shown) is not depicted in the drawings for convenience of description, and the outer surfaces of the electrode lead 300 located at both sides of the surface-deformed portion 350 may be described as the coating layer (not shown).

Generally, since it is not easy to bond the electrode lead 300 and the lead film 400 to each other, a coating layer for adhesion with the lead film 400 may be formed on the outer surface of the electrode lead 300.

If the surface-deformed portion 350 is formed by removing a part of the coating layer formed on the outer surface of the electrode lead 300 as in an embodiment of the present disclosure, in the surface-deformed portion 350, the adhesive force between the electrode lead 300 and the lead film 400 may be weakened, or there is no adhesion force at all. Accordingly, the gas generated inside the battery case 200 may be discharged to the surface-deformed portion 350 at the interface between the electrode lead 300 and the lead film 400 and discharged to the outside of the battery case 200.

More specifically, the surface-deformed portion 350 may be formed by etching the coating layer (not shown) by laser, UV-ozone (UvO) treatment, sputtering, or the like. However, the etching method for the surface-deformed portion 350 is not limited thereto, and any process capable of forming a predetermined shape by processing the surface of the electrode lead 300 may be applied.

For example, the coating layer (not shown) may be made of a metal material. More specifically, the metal material may contain at least one of chrome and nickel. However, the coating layer (not shown) is not limited thereto, and may include a material generally coated on the outer surface of the electrode lead 300.

Accordingly, since the surface-deformed portion 350 may be formed by removing the coating layer (not shown) formed on the outer surface of the electrode lead 300, there is an advantage in that the surface-deformed portion 350 may be prepared through a relatively simple manufacturing process without requiring additional components. In addition, if the surface-deformed portion 350 is formed by removing the coating layer (not shown) formed on the outer surface of the electrode lead 300, when the surface-deformed portion 350 is actually viewed with the naked eye, it is possible to minimize the deformation of the appearance of the electrode lead 300.

As another example, the surface-deformed portion 350 may be formed by removing a part itself corresponding to the outer surface of the electrode lead 300. That is, the outer surface of the electrode lead 300 may have a stepped structure due to the surface-deformed portion 350.

More specifically, the surface-deformed portion 350 may be formed by etching the outer surface of the electrode lead 300 by laser, UV-ozone (UvO) treatment, sputtering, or the like. However, the etching method for the surface-deformed portion 350 is not limited thereto, and any process capable of forming a predetermined shape by processing the surface of the electrode lead 300 may be applied.

Accordingly, since the surface-deformed portion 350 may be formed by removing the outer surface of the electrode lead 300, so the surface-deformed portion 350 may be prepared through a relatively simple manufacturing process, and there is an advantage in that no additional parts are required.

For example, referring to FIGS. 5 and 6, the lead film 400 may include a first lead film and a second lead film respectively located at an upper portion and a lower portion of the electrode lead 300. In addition, the first lead film and the second lead film may be integrated with each other. Accordingly, the lead film 400 may improve the sealing property of the sealing portion 250 and the electrode lead 300 while preventing the side surface of the electrode lead 300 from being exposed to the outside.

Here, the surface-deformed portion 350 may be located on at least one of the upper surface of the electrode lead 300 and the lower surface of the electrode lead 300. As in FIGS. 5(a) and 6(a), when the surface-deformed portion 350 is located on the upper surface of the electrode lead 300, the surface-deformed portion 350 may be covered by the first lead film of the lead film 400. Conversely, this may also be the same when the surface-deformed portion 350 is located on the lower surface of the electrode lead 300. In addition, as shown in FIGS. 5(b) and 6(b), when the surface-deformed portion 350 is located on the upper surface and the lower surface of the electrode lead 300, respectively, the surface-deformed portion 350 may be covered by the first lead film and the second lead film, respectively. However, the number of surface-deformed portions 350 is not limited to the above, and the surface-deformed portion 350 may be formed in an appropriate number on the outer surface of the electrode lead 300.

Accordingly, by adjusting the number of the surface-deformed portions 350 formed on the outer surface of the electrode lead 300, the durability and airtightness between the electrode lead 300 and the lead film 400 may be controlled. In addition, by minimizing the number of the surface-deformed portions 350 as necessary, it is possible to simplify the manufacturing process and reduce the cost.

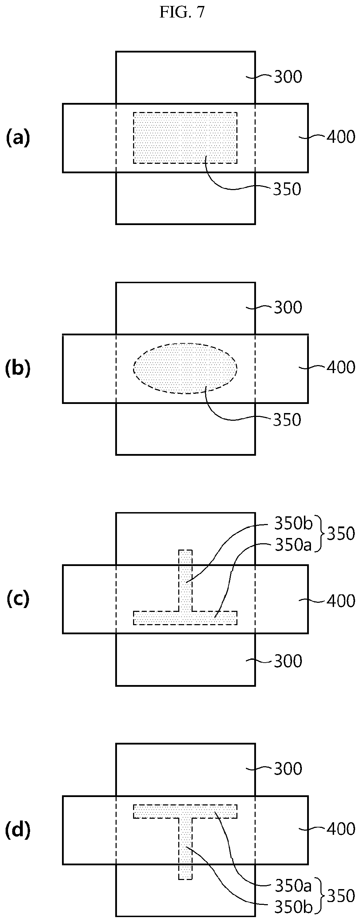

FIG. 7 is an enlarged view showing the electrode lead and the lead film in the battery cell of FIG. 3.

Referring to FIGS. 5 to 7, the surface-deformed portion 350 extends along the protruding direction of the electrode lead 300, based on the protruding direction of the electrode lead 300, and the end of the surface-deformed portion 350 adjacent to the outer side of the sealing portion 250 may be located inward of the end of the lead film. Here, the end of the surface-deformed portion 350 located inward of the end of the lead film means that the end of the surface-deformed portion 350 is covered by the lead film. That is, it means that the end of the surface-deformed portion 350 located adjacent to the outer side of the sealing portion 250 is positioned in the inward direction of the battery case 200 rather than the end of the lead film. In this specification, the outer side of the sealing portion 250 means the end of the sealing portion 250 adjacent to the outside of the battery case 200.

In addition, based on the protruding direction of the electrode lead 300, the end of the surface-deformed portion 350 located adjacent to the inner side of the sealing portion 250 may be located inward of the end of the lead film. Here, the end of the surface-deformed portion 350 located inward of the end of the lead film means that the end of the surface-deformed portion 350 is covered by the lead film. That is, it means that the end of the surface-deformed portion 350 located adjacent to the inner side of the sealing portion 250 is positioned in the outward direction of the battery case 200 rather than the end of the lead film. In this specification, the inner side of the sealing portion 250 means the end of the sealing portion 250 adjacent to the inside of the battery case 200.

In addition, based on the protruding direction of the electrode lead 300, the end of the surface-deformed portion 350 located adjacent to the outer side of the sealing portion 250 may be positioned outward of the end of the lead film. Here, the end of the surface-deformed portion 350 located outward of the end of the lead film means that the end of the surface-deformed portion 350 is not covered by the lead film. That is, it means that the end of the surface-deformed portion 350 located adjacent to the outer side of the sealing portion 250 is positioned in the outward direction of the battery case 200 rather than the end of the lead film. In this specification, the outer side of the sealing portion 250 means the end of the sealing portion 250 adjacent to the outside of the battery case 200.

In addition, based on the protruding direction of the electrode lead 300, the end of the surface-deformed portion 350 located adjacent to the inner side of the sealing portion 250 may be positioned outward of the end of the lead film. Here, the end of the surface-deformed portion 350 located outward of the end of the lead film means that the end of the surface-deformed portion 350 is not covered by the lead film. That is, it means that the end of the surface-deformed portion 350 located adjacent to the inner side of the sealing portion 250 is positioned in the inward direction of the battery case 200 rather than the end of the lead film. In this specification, the inner side of the sealing portion 250 means the end of the sealing portion 250 adjacent to the inside of the battery case 200.

In an embodiment, the surface-deformed portion 350 may be positioned between one end and the other end of the lead film 400 based on the protruding direction of the electrode lead 300.

In addition, the surface-deformed portion 350 extends in a direction perpendicular to the protruding direction of the electrode lead 300, and the length of the surface-deformed portion 350 may be smaller than the width of the electrode lead 300. In this specification, the length of the surface-deformed portion 350 refers to a maximum value of the distance between one end and the other end of the surface-deformed portion 350 based on a direction perpendicular to the protruding direction of the electrode lead 300, and the width of the electrode lead 300 refers to a maximum value of the distance between one end and the other end of the electrode lead 300 based on a direction perpendicular to the protruding direction of the electrode lead 300.

For example, referring to FIGS. 7(a) and 7(b), the surface-deformed portion 350 may have a circular shape or a rectangular shape. When the surface-deformed portion 350 has a circular shape or a rectangular shape, the surface-deformed portion 350 may have a large area.

Accordingly, as shown in FIGS. 7(a) and 7(b), gas may be easily discharged even if both one end and the other end of the surface-deformed portion 350 are located between one end and the other end of the lead film 400 based on the protruding direction of the electrode lead 300.

Although not shown in FIGS. 7(a) and 7(b), when the surface-deformed portion 350 has a circular shape or a rectangular shape, one end and/or the other end of the surface-deformed portion 350 based on the protruding direction of the electrode lead 300 may not be covered by the lead film 400. In this case, gas may be discharged more easily, compared to the case where both one end and the other end of the surface-deformed portion 350 are positioned between one end and the other end of the lead film 400.

As another example, referring to FIGS. 7(c) and 7(d), the surface-deformed portion 350 includes a first surface-deformed portion 350a and a second surface-deformed portion 350b connected to each other, where the first surface-deformed portion 350a may extend along the longitudinal direction of the sealing portion and the second surface-deformed portion 350b may extend along the protruding direction of the electrode lead 300. In this specification, the longitudinal direction of the sealing portion refers to a direction perpendicular to the protruding direction of the electrode lead 300.

Here, referring to FIGS. 3 and 7 (c), the first surface-deformed portion 350a may be positioned adjacent to the inside of the battery case 200. That is, the first surface-deformed portion 350a may be located adjacent to the inner side of the sealing portion 250 based on the protruding direction of the electrode lead 300.

Also, referring to FIGS. 3 and 7(c), the second surface-deformed portion 350b may be positioned adjacent to the outside of the battery case 200. That is, the second surface-deformed portion 350b may be positioned adjacent to the outer side of the sealing portion 250 based on the protruding direction of the electrode lead 300.

For example, the length of the first surface-deformed portion 350a may be smaller than the width of the electrode lead 300.

In this specification, the length of the first surface-deformed portion 350a refers to a maximum value of the distance between one end and the other end of the first surface-deformed portion 350a based on a direction perpendicular to the protruding direction of the electrode lead 300, and the width of the electrode lead 300 may refer to a maximum value of the distance between one end and the other end of the electrode lead 300 based on a direction perpendicular to the protruding direction of the electrode lead 300.

Referring to FIGS. 7(c) and 7(d), the first surface-deformed portion 350a may be entirely positioned on the lead film 400.

Referring to FIGS. 3 and 7(c), since one end of the second surface-deformed portion 350b extends toward the outside of the battery case 200, one end of the second surface-deformed portion 350b may not be covered by the lead film 400. Accordingly, since one end of the second surface-deformed portion 350b is exposed to the outside of the battery case 200, the amount of gas discharged by the surface-deformed portion 350 may be more effectively increased.

Also, referring to FIGS. 3 and 7(d), the first surface-deformed portion 350a may be positioned adjacent to the outside of the battery case 200. That is, the first surface-deformed portion 350a may be positioned adjacent to the outer side of the sealing portion 250 based on the protruding direction of the electrode lead 300.

Also, referring to FIGS. 3 and 7(d), the second surface-deformed portion 350b may be positioned adjacent to the inside of the battery case 200. That is, the second surface-deformed portion 350b may be positioned adjacent to the inner side of the sealing portion 250 based on the protruding direction of the electrode lead 300.

More specifically, as shown in FIG. 7(d), since one end of the second surface-deformed portion 350b extends toward the inside of the battery case 200, one end of the second surface-deformed portion 350b may not be covered by the lead film 400. Accordingly, since one end of the second surface-deformed portion 350b is exposed to the inside of the battery case 200, the amount of gas discharged by the surface-deformed portion 350 may be more effectively increased.

However, the shape of the surface-deformed portion 350 is not limited to the above, and the surface-deformed portion 350 may be formed in an appropriate shape on the outer surface of the electrode lead 300.

Accordingly, by controlling the shape of the surface-deformed portion 350 formed on the outer surface of the electrode lead 300, the durability and airtightness between the electrode lead 300 and the lead film 400 or the gas discharge amount may be controlled. In addition, by changing the shape of the surface-deformed portion 350 as necessary, it is possible to simplify the manufacturing process and reduce the cost.

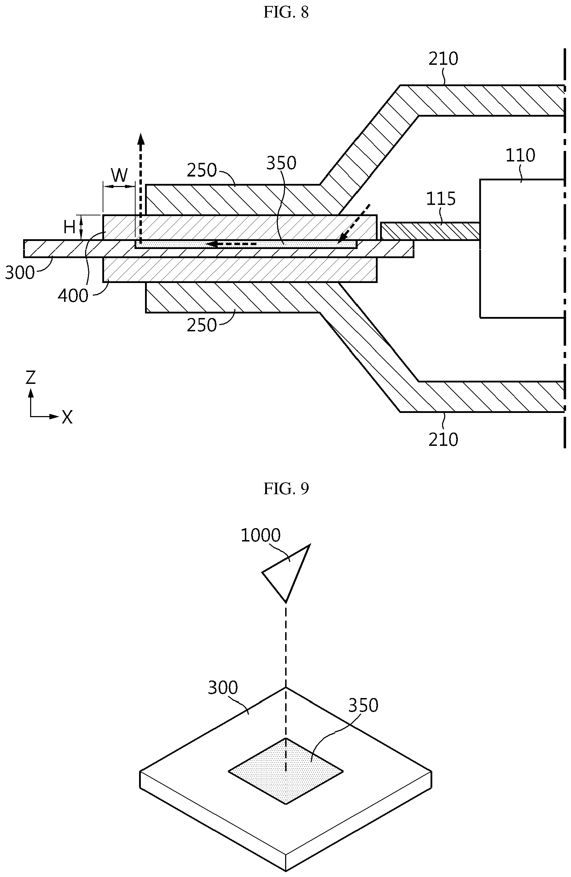

FIG. 8 is a cross-sectional view, taken along the axis b-b' of FIG. 3.

Referring to FIG. 8, based on the protruding direction of the electrode lead 300, one end of the surface-deformed portion 350 may be located inward of the inner surface of the sealing portion 250. In this specification, the inner surface of the sealing portion 250 means the end of the sealing portion 250 adjacent to the inside of the battery case 200, and one end of the surface-deformed portion 350 located inward of the inner surface of the sealing portion 250 means that one end of the surface-deformed portion 350 is located in the inward direction of the battery case 200 rather than the inner surface of the sealing portion 250. If one end of the surface-deformed portion 350 is located inward of the inner surface of the sealing portion 250, the surface-deformed portion 350 is not interfered by the sealing portion 250, so that gas may be more easily introduced into the surface-deformed portion 350.

In addition, based on the protruding direction of the electrode lead 300, the other end of the surface-deformed portion 350 may be located outward of the outer surface of the sealing portion 250. In this specification, the outer surface of the sealing portion 250 means the end of the sealing portion 250 adjacent to the outside of the battery case 200, and the other end of the surface-deformed portion 350 located outward of the outer surface of the sealing portion 250 means that the other end of the surface-deformed portion 350 is located in the outward direction of the battery case 200 rather than the outer surface of the sealing portion 250. If the other end of the surface-deformed portion 350 is located outward of the outer surface of the sealing portion 250, the gas introduced into the surface-deformed portion 350 may be more easily discharged to the outside. For example, since the other end of the surface-deformed portion 350 is not interfered by the sealing portion 250, the gas introduced into the surface-deformed portion 350 may be more easily discharged to the outside.

Accordingly, the gas generated inside the battery cell 100 may be discharged toward the surface-deformed portion 350, and the gas introduced into the surface-deformed portion 350 may be easily discharged toward the outside. If both ends of the surface-deformed portion 350 formed on the outer surface of the electrode lead 300 are exposed to the inside of the battery case 200 and to the outside of the battery case 200, the gas generated inside the battery case 200 is easily introduced into the surface-deformed portion 350 and may be more easily discharged to the outside of the surface-deformed portion 350.

Specifically, the gas introduced into the surface-deformed portion 350 may be discharged along the Z-axis direction via the lead film 400 on the surface-deformed portion 350. For example, if the other end of the surface-deformed portion 350 is located outward of the outer surface of the sealing portion 250 and is located inward of the end of the lead film 400 (in the inward direction of the battery case 200), the gas introduced into the surface-deformed portion 350 may be discharged along the Z-axis direction from the lead film 400 between the other end of the surface-deformed portion 350 and the outer surface of the sealing portion 250. Alternatively, although not shown in FIG. 8, if the other end of the surface-deformed portion 350 is located outward of the outer surface of the sealing portion 250 and is located outward of the end of the lead film 400 (in the outward direction of the battery case 200), the gas introduced into the surface-deformed portion 350 may be immediately discharged to the outside.

In one embodiment of the present disclosure, the gas permeability of the lead film 400 may be 20 Barrer to 60 Barrer, or 30 Barrer to 40 Barrer at 60°C. For example, the carbon dioxide permeability of the lead film 400 may satisfy the above range. In addition, the gas permeability may satisfy the above range at 60°C based on the thickness of the lead film 400 of 200 µm. If the gas permeability of the lead film 400 satisfies the above range, the gas generated inside the battery cell may be more effectively discharged.

In this specification, the gas permeability may be measured by ASTM F2476-20.

In one embodiment of the present disclosure, the moisture penetration amount of the lead film 400 may be 0.02 g to 0.2 g, or 0.02 g to 0.04 g, or 0.06 g, or 0.15 g for 10 years at 25°C, 50 %RH. If the moisture penetration amount of the lead film 400 satisfies the above range, the penetration of moisture from the lead film 400 may be more effectively prevented.

The moisture penetration amount of the lead film 400 may be measured by adopting the ASTM F 1249 method. At this time, the moisture penetration amount may be measured using equipment officially certified by MCOON.

In one embodiment of the present disclosure, the lead film 400 may have a gas permeability of 20 Barrer to 60 Barrer at 60°C and a moisture penetration amount of 0.02 g to 0.2 g at 25°C, 50 %RH for 10 years. If the gas permeability and the moisture penetration amount of the lead film 400 satisfy the above ranges, the penetration of moisture from the outside may be more effectively prevented while discharging the gas generated inside the secondary battery.

In one embodiment of the present disclosure, the lead film 400 may include a polyolefin-based resin. For example, the lead film 400 may include a polyolefin-based resin satisfying the gas permeability and/or moisture penetration amount values described above. The polyolefin-based resin may include at least one material selected from the group consisting of polypropylene, polyethylene, and polyvinyl difluoride (PVDF). While the lead film 400 contains polypropylene, the gas permeability of the lead film 400 may be 20 Barrer to 60 Barrer at 60°C. Also, the moisture penetration amount may be 0.06 g to 0.15 g. In this case, the gas generated inside the secondary battery may be more effectively discharged, and the penetration of moisture from the outside may be easily prevented.

In addition, since the lead film 400 is made of the above-described material, the lead film 400 may maintain the airtightness of the battery cell 100 and prevent leakage of the internal electrolytic solution.

Referring to FIG. 8, the thickness (H) of the lead film 400 located on the surface-deformed portion 350 may be 100 µm to 300 µm, or 100 µm to 200 µm. If the thickness (H) of the lead film 400 located on the surface-deformed portion 350 satisfies the above range, the gas inside the battery case 200 may be more easily discharged to the outside.

Referring to FIG. 8, if the other end of the surface-deformed portion 350 is located outward of the outer surface of the sealing portion 250 and located inward of the end of the lead film 400 (in the inward direction of the battery case 200), the width (W) between the other end of the surface-deformed portion 350 and the outermost end of the lead film 400 may be 2 mm or more, or 2 mm to 3 mm. If the width (W) between the other end of the surface-deformed portion 350 and the outermost end of the lead film 400 satisfies the above range, it may be easier to prevent the lead film 400 from being torn during the process of discharging the gas generated inside the battery case 200 to the outside.

In one embodiment of the present disclosure, if one end of the surface-deformed portion 350 is located inward of the inner surface of the sealing portion 250 and the other end of the surface-deformed portion 350 is located outward of the outer surface of the sealing portion 250, the area of the other end of the surface-deformed portion 350 exposed outward of the outer surface of the sealing portion 250 may be greater than the area of one end of the surface-deformed portion 350 exposed inward of the inner surface of the sealing portion 250. The gas discharge amount is proportional to the gas discharge area and pressure. Since the pressure on the inner side of the battery case 200 is greater than the pressure on the outer side of the battery case 200, if the area of the other end of the surface-deformed portion 350 exposed outward of the outer surface of the sealing portion 250 is greater than the area of one end of the surface-deformed portion 350 exposed inward of the inner surface of the sealing portion 250, the gas generated inside the battery case 200 may be more easily discharged to the outside.

In one embodiment of the present disclosure, the area of the other end of the surface-deformed portion 350 exposed at the outer side of the sealing portion 250 may be 40 mm² to 80 mm². This is a size in which about 0.5 cc to 3 cc of gas can be discharged per day based on an internal pressure of 1 atm at 60°C. In addition, this is a size in which the moisture penetration amount may be 0.02 g to 0.2 g for 10 years at 25°C, 50 %RH.

Although not shown in FIG. 8, one end and/or the other end of the surface-deformed portion 350 may not be covered by the lead film 400. That is, one end of the surface-deformed portion 350 may be exposed to the inside of the battery case 200. In this case, when the gas inside the battery case 200 is introduced into the surface-deformed portion 350, one end of the surface-deformed portion 350 is not interfered by the sealing portion 250 and the lead film 400, so that the gas may be more easily introduced. Also, the other end of the surface-deformed portion 350 may be exposed to the outside of the battery case 200. In this case, the gas may be more easily discharged to the outside.

FIG. 9 is a diagram showing that the surface of the electrode lead of FIG. 3 is treated.

Referring to FIG. 9, the battery cell manufacturing device 1000 according to another embodiment of the present disclosure may emit a laser to the electrode lead 300 to form the surface-deformed portion 350 on the outer surface of the electrode lead 300. More specifically, the battery cell manufacturing device 1000 may etch the outer surface of the electrode lead 300 with a laser to form the surface-deformed portion 350 on the outer surface of the electrode lead 300. Here, before assembling each component of the battery cell 100, the process of forming the surface-deformed portion 350 by the battery cell manufacturing device 1000 may be performed in advance. However, the method of manufacturing the surface-deformed portion 350 is not limited thereto, and any process capable of removing a part of the outer surface of the electrode lead 300 is applicable.

Accordingly, the battery cell manufacturing device 1000 according to this embodiment may easily form the surface-deformed portion 350 having a predetermined shape and size on the outer surface of the electrode lead 300.

For example, when the surface-deformed portion 350 is formed by removing a part of the outer surface of the electrode lead 300, the intensity of the laser emitted from the battery cell manufacturing device 1000 may be enough to corrode the outer surface of the electrode lead 300. As another example, when the surface-deformed portion 350 is formed by removing a part of the coating layer (not shown) formed on the outer surface of the electrode lead 300, the intensity of the laser emitted from the battery cell manufacturing device 1000 may be enough to corrode the coating layer (not shown) formed on the outer surface of the electrode lead 300.

Accordingly, the intensity of the laser applied to the outer surface of the electrode lead 300 may be adjusted, so that the surface-deformed portion 350 may be appropriately formed according to the configuration of the outer surface of the electrode lead 300.

A battery module according to another embodiment of the present disclosure includes the battery cell described above. Meanwhile, one or more battery modules according to this embodiment may be packaged in a pack case to form a battery pack.

The battery module described above and the battery pack including the same may be applied to various devices. These devices may be transportation means such as electric bicycles, electric vehicles, hybrid electric vehicles, and the like, but the present disclosure is not limited thereto, and the present disclosure may be applied various devices that can use a battery module and a battery pack including the same, which is also within the scope of the right of the present disclosure.

Although the preferred embodiment of the present disclosure has been described in detail above, the scope of the right of the present disclosure is not limited thereto, and various modifications and improvements made by those skilled in the art using the basic concept of the present disclosure defined in the appended claims also fall within the scope of the right of the present disclosure.

## Claims

1. A battery cell, comprising:
a battery case having an accommodation portion in which an electrode assembly is mounted, and a sealing portion formed by sealing an outer periphery thereof;
an electrode lead electrically connected to an electrode tab included in the electrode assembly and protruding out of the battery case via the sealing portion; and
a lead film located at a portion corresponding to the sealing portion in at least one of an upper portion and a lower portion of the electrode lead,
wherein a surface-deformed portion is formed on an outer surface of the electrode lead, and
the surface-deformed portion is located between the lead film and the electrode lead.

2. The battery cell according to claim 1,
wherein the surface-deformed portion is formed by removing a part of the outer surface of the electrode lead.

3. The battery cell according to claim 2,
wherein a coating layer is formed on the outer surface of the electrode lead, and the surface-deformed portion is formed by removing a part of the coating layer.

4. The battery cell according to claim 3,
wherein the surface-deformed portion is formed by removing the coating layer by laser etching.

5. The battery cell according to claim 3,
wherein the coating layer is made of a metal material.

6. The battery cell according to claim 5,
wherein the metal material contains at least one of chrome and nickel.

7. The battery cell according to claim 1,
wherein the surface-deformed portion is configured to extend along a protruding direction of the electrode lead, and
based on the protruding direction of the electrode lead, an end of the surface-deformed portion disposed adjacent to an outer side of the sealing portion is located inward of an end of the lead film.

8. The battery cell according to claim 1,
wherein the surface-deformed portion is configured to extend along a protruding direction of the electrode lead, and
based on the protruding direction of the electrode lead, an end of the surface-deformed portion disposed adjacent to an inner side of the sealing portion is located inward of an end of the lead film.

9. The battery cell according to claim 1,
wherein the surface-deformed portion is configured to extend along a protruding direction of the electrode lead, and
based on the protruding direction of the electrode lead, an end of the surface-deformed portion disposed adjacent to an outer side of the sealing portion is located outward of an end of the lead film.

10. The battery cell according to claim 1,
wherein the surface-deformed portion is configured to extend along a protruding direction of the electrode lead, and
based on the protruding direction of the electrode lead, an end of the surface-deformed portion disposed adjacent to an inner side of the sealing portion is located outward of an end of the lead film.

11. The battery cell according to claim 1,
wherein the surface-deformed portion is configured to extend in a direction perpendicular to a protruding direction of the electrode lead, and a length of the surface-deformed portion is smaller than a width of the electrode lead.

12. The battery cell according to claim 1,
wherein the surface-deformed portion has a circular shape or a rectangular shape.

13. The battery cell according to claim 1,
wherein based on a protruding direction of the electrode lead, one end of the surface-deformed portion is located inward of an inner surface of the sealing portion.

14. The battery cell according to claim 13,
wherein based on the protruding direction of the electrode lead, the other end of the surface-deformed portion is located outward of an outer surface of the sealing portion.

15. The battery cell according to claim 14,
wherein an area of the other end of the surface-deformed portion exposed outward of the outer surface of the sealing portion is greater than an area of one end of the surface-deformed portion exposed inward of the inner surface of the sealing portion.

16. The battery cell according to claim 1,
wherein the surface-deformed portion includes a first surface-deformed portion and a second surface-deformed portion connected to each other,
the first surface-deformed portion is configured to extend along a longitudinal direction of the sealing portion, and
the second surface-deformed portion is configured to extend along a protruding direction of the electrode lead.

17. The battery cell according to claim 16,
wherein a length of the first surface-deformed portion is smaller than a width of the electrode lead.

18. The battery cell according to claim 16,
wherein the first surface-deformed portion is located adjacent to an inside of the battery case, and
the second surface-deformed portion is located adjacent to an outside of the battery case.

19. The battery cell according to claim 16,
wherein the first surface-deformed portion is located adjacent to an outside of the battery case, and
the second surface-deformed portion is located adjacent to an inside of the battery case.

20. The battery cell according to claim 16,
wherein the first surface-deformed portion is entirely located on the lead film, and one end of the second surface-deformed portion is not covered by the lead film.

21. The battery cell according to claim 1,
wherein the lead film includes a first lead film and a second lead film, the first lead film is located at an upper portion of the electrode lead, and the second lead film is located at a lower portion of the electrode lead.

22. The battery cell according to claim 21,
wherein the electrode lead is located between the first lead film and the second lead film, and the first lead film and the second lead film are integrated with each other.

23. The battery cell according to claim 1,
wherein the surface-deformed portion is located on at least one of an upper surface of the electrode lead and a lower surface of the electrode lead.

24. The battery cell according to claim 1,
wherein the lead film has gas permeability of 20 Barrer to 60 Barrer at 60°C.

25. The battery cell according to claim 1,
wherein the lead film has a moisture penetration amount of 0.02 g to 0.2 g for 10 years at 25°C, 50 %RH.

26. The battery cell according to claim 1,
wherein the lead film contains polypropylene.

27. The battery cell according to claim 1,
wherein the lead film located on the surface-deformed portion has a thickness of 100 µm to 300 µm.

28. The battery cell according to claim 1,
wherein a width between the other end of the surface-deformed portion and an outermost end of the lead film is 2 mm or more.

29. A battery module, comprising the battery cell according to claim 1.
